## Europäisches Patentamt

## European Patent Office

## Office européen des brevets

(19)

(11) Veröffentlichungsnummer: **0 033 969**
**B1**

(12)

# EUROPÄISCHE PATENTSCHRIFT

(45) Veröffentlichungstag der Patentschrift:
09.05.84

(51) Int. Cl.³: **F 16 J 10/04,** F 02 F 1/08

(21) Anmeldenummer: **81100901.8**

(22) Anmeldetag: **09.02.81**

(54) **Kolbenmaschinengehäuse mit Bimetallzylinder.**

(30) Priorität: **11.02.80 DE 3002994**

(43) Veröffentlichungstag der Anmeldung:
**19.08.81 Patentblatt 81/33**

(45) Bekanntmachung des Hinweises auf die Patenterteilung:
**09.05.84 Patentblatt 84/19**

(84) Benannte Vertragsstaaten:
**BE DE FR GB IT NL SE**

(56) Entgegenhaltungen:
**DE - A - 2 325 377**
**DE - B - 1 006 225**
**DE - B - 1 068 130**
**DE - C - 358 074**

(73) Patentinhaber: **INTERATOM Internationale Atomreaktorbau GmbH, Friedrich-Ebert-Strasse, D-5060 Bergisch Gladbach 1 (DE)**

(72) Erfinder: **Cyron, Theo, Hüttenfeld 1, D-5060 Bergisch Gladbach 3 (DE)**

(74) Vertreter: **Mehl, Ernst, Dipl.-Ing. et al, Postfach 22 01 76, D-8000 München 22 (DE)**

**Beschreibung**

Die Erfindung betrifft Einzelzylinder, Zylinderblöcke und Zylinderlaufbuchsen für kolbengetriebene Kraft- oder Arbeitsmaschinen, insbesondere Verbrennungsmotoren in Leichtmetallausführung, deren Zylinderinnenfläche (Lauffläche) durch verschleiss- bzw. korrosionsfeste, hochtemperaturbeständige Schutzschichten gegen vorzeitigen Abtrag oder Kaltverschweissung (Fressen) geschützt sind.

Im Zuge der Weiterentwicklung von Verbrennungsmotoren und kolbengetriebenen Arbeitsmaschinen zu höherer Leistung bei geringerem Eigengewicht gewinnt Aluminium wegen seiner günstigen physikalischen und werkstofftechnischen Eigenschaften zunehmend an Bedeutung. Stand der Technik sind Leichtmetallmotoren mit nassen oder trockenen Graugussbuchsen. Hierbei werden wegen der von konventionellen Motorzylindern bekannten und übertragbaren Gleitpaarungsverhältnisse zwischen Zylinderwand und Kolben Zylinderlaufbuchsen aus Grauguss in die tragende Konstruktion eines Aluminium-Gussblockes eingepasst. Trotz der sehr fertigungsaufwendigen Konstruktion in bezug auf eine passungsgenaue Zerspanung, Montage und Abdichtung von Motorblock und Laufbuchse führt diese Konzeption wegen des verbleibenden Graugussgewichtes der Laufbuchsen und deren begrenzten thermischen Belastbarkeit nur teilweise zur angestrebten Leistungssteigerung in gewichtssparender Leichtbauweise.

Die Entwicklung von Ganzaluminiummotoren nach dem sogenannten Umkehrprinzip mit «laufbuchslosen» Zylinderblöcken aus der übereutektischen Aluminiumgusslegierung GK-Alsi 17 Cu 4 Mg sind begleitet von grossem fertigungstechnischen Aufwand in der Herstellung mit erheblichen zerspanungstechnischen Schwierigkeiten. Da aus Gründen der sehr schlechten Gleitpaarung einer Aluminium-Zylinderlauffläche mit einem Aluminiumkolben bei diesem Baukonzept eine ebenfalls kostenaufwendige, galvanisch aufgetragene Gleitbeschichtung der Kolbenoberfläche erforderlich ist, gehen neuzeitliche Entwicklungswege für Hochleistungsmotoren in Richtung galvanisch aufgetragener Nickelschichten mit eingelagerten Siliziumkarbidteilchen auf die Zylinderoberfläche des Motorblocks aus einer leicht bearbeitbaren eutektischen Aluminiumgusslegierung (z.B. GK-Alsi 12 MgCuNi), um bei einem Ganzaluminium-Motorzylinderblock eine Materialgleitung mit unbeschichteten Aluminiumkolben zu ermöglichen und die Zylinderlauffläche vor schnellem Verschleiss zu schützen. Dieses Bearbeitungsverfahren ist selbst für geringe Beschichtungsstärken sehr zeit- und somit kostenaufwendig und bedarf einer abschliessenden sehr schwierigen Schleifbearbeitung, die meist nur von wenigen Spezialfirmen ausgeführt werden kann. Die verbleibende Restbeschichtung nach dem Schleifvorgang beträgt nur 0,02 - 0,04 mm, so dass ein Überholungsschleifen des Zylinders mangels ausreichender Schichtdicke nicht möglich ist. In der Zeitschrift «Aluminium» — Jahrgang 1979 Heft 12, insbesondere auf den Seiten 815-817 wird der Stand der Technik dargestellt.

In der DE-A-2 325 377.2 wird ein Verfahren zum Auskleiden einer Bohrung einer Brennkraftmaschine beschrieben. Dabei steht die Bohrungsauskleidung unter rein elastischer Druckspannung. Dies hat zur Folge, dass nur die Rauhigkeitsspitzen der Bohrungswand den Auskleidungswerkstoff berühren, wodurch nur ein geringer Materialkontakt vorliegt, der wesentliche Nachteile in bezug auf Wärmeübergang und axiale Kraftübertragung aufweist. Dies geht schon daraus hervor, dass die Auskleidung entsprechend dieser Druckschrift unter Federwirkung elastisch mit Hilfe einer axialen Längsbewegung in die Bohrung eingebracht wird.

Neben den entscheidenden Nachteilen einer geschlitzten Bohrungsauskleidung in bezug auf Kantendruck, Verkokung und Verunreinigung, Fressneigungen sowie Undichtigkeit und Erosion durch Gasströmung im Schlitz der Auskleidung, erfordert diese Auskleidung höchste Toleranz- und Formgenauigkeit an Bohrung und Auskleidung. Da die Auskleidung die Form der Bohrung annimmt, muss die Bohrung bereits vorher unter Berücksichtigung der Wandstärkentoleranz der Auskleidung präzise gefertigt und wegen der erforderlichen guten Anlage mit einer hohen Oberflächengüte versehen sein. Ebenso erfordert der Zuschnitt des Auskleidungsbleches höchste Massgenauigkeit in Abstimmung auf die absolute Bohrungsabmessung, wenn die Schlitzkanten in der ausgekleideten Bohrung unter definierter Druckspannung gegeneinander drücken sollen.

In der DE-B-1 006 225 werden Laufbüchsen aus Gusseisen oder Stahl vorgeschlagen, die mit dem Zylinder durch Vorspannung in Verbindung stehen. Diese beiden Materialien werden als völlig gleichwertige Alternativen dargestellt und dementsprechend nach der gleichen Methode eingebracht. Das vorgeschlagene Gusseisen lässt sich aber nicht plastisch kalt verformen. Als Verbindungsverfahren wird dort nur das Einpressen, Einschrumpfen oder Umgiessen genannt. Einschrumpfen und Umgiessen sind typische thermische Verfahren, die bei der vorliegenden Erfindung vermieden werden sollen. Das Einpressen ist nicht näher beschrieben, kann aber allenfalls als axiales Einpressen unter elastischer Vorspannung verstanden werden, wie es in der oben erwähnten Schrift enthalten ist. Die empfohlene, aussen stumpfkegelige Gestalt der Büchse ist nur mit erheblichem Aufwand herstellbar.

In der DE-B-1 068 130 werden Radbremszylinder beschrieben, die nur geringe Durchmesser aufweisen und mit Gummimanschetten gegenüber dem Kolben abgedichtet sind und brauchen daher nicht so geringe Toleranzen, wie bei der vorliegenden Erfindung. Die Büchsen werden eingepresst oder mittels eines axial wirkenden Aufweitungswerkzeuges gegen die Zylinderwandung gepresst. Diese Verbindung ist aufgrund der hohen Einpress- und Rückzugskraft des Werkzeuges nur bei kleinen Durchmessern auf kurzer Distanz und bei im Verhältnis zum Durchmesser relativ dickwandigen Büchsen möglich und führt auch nicht zu der mit der vorliegenden Erfindung realisierbaren, exakt zylindrischen Form der Innenwand der Büchse.

Zielsetzung der vorliegenden Erfindung ist ein wirtschaftlich herstellbares Kolbenmaschinengehäuse für Arbeits- oder Kraftmaschinen aus anwendungsoptimierten Werkstoffen (z.B. Ganzaluminiumzylinderblock für Verbrennungsmotoren) mit einer korrosionsbeständigen, hochtemperatur- und verschleissfesten Rohrauskleidung der Zylinder- oder Laufbuchseninnenoberfläche mit tribologisch sehr guten Notlaufeigenschaften, bei dem die oben aufgeführten Nachteile der z.Z. bekannten Ganzaluminium Motorblockausführungen entfallen.

Zur Lösung dieser Aufgabe wird ein Kolbenmaschinengehäuse nach Anspruch 1 vorgeschlagen. Die jeweils funktionsoptimierten Werkstoffe der Zylinderauskleidung und des Zylinders werden durch plastische Kaltverformung der Auskleidung in direktem spaltfreien metallischen Kontakt miteinander mechanisch verbunden zu sogenannten Bimetallzylindern. Die Auskleidung in Form eines dünnwandigen Rohres aus nahezu jedem gewünschten verschleiss- und korrosionsfestem Material lässt sich hierzu durch bekannte aufweitende Arbeitsverfahren wie z.B. rotierendes Hämmern, Walzen oder Kaltfliessdrücken in die Zylinderbohrung kraft- und formschlüssig einformen. Besonders vorteilhaft ist eine Wandstärkenabstreckung der Auskleidung während der Kalteinformung durch rotierende Streckwerkzeuge. Der hierbei auftretende hohe Kaltverformungsgrad garantiert eine spaltfreie Verfüllung von Rillen oder Vertiefungen an der Innenoberfläche der Zylinderbohrung mit dem Werkstoff des inneren Auskleidungsrohres und sichert in Verbindung mit den streckgrenznahen, tangentialen Druckspannungen der Auskleidung die Aufnahme von Axial- und Torsionskräften ohne eine molekulare Bindung oder Haftung zwischen Auskleidung und Zylinderwand in radialer Richtung.

Die mit der Erfindung erzielten Vorteile bestehen in der Verbesserung der tribologischen Eigenschaften von Zylindern für Kolbenmaschinen, insbesondere Verbrennungsmotoren in Leichtbauweise aus zerspanungsgünstigen Aluminiumlegierungen durch die vorgenannte dünnwandige Auskleidung, wobei inhomogene Temperaturverteilungen sowie Wärmeübergangsbarrieren durch Spalte und Hohlräume, wie sie bei eingepressten oder eingegossenen trockenen Laufbuchsen auftreten können, infolge des permanenten spaltfreien metallischen Kontaktes selbst bei Formänderungen und thermischen Dehnungen des Zylinders aufgrund der Elastizität des unter tangentialen Druckspannungen stehenden Auskleidungsrohres vermieden werden. Die relativ dünnen Wandstärken des Auskleidungrohres (0,2 mm bis ca. 2 mm) wirken sich auf die Wärmeübertragungscharakteristik des Bimetallzylinders sehr positiv aus. Die erfindungsgemässen Kolbenmaschinengehäuse können aus allen geeigneten Werkstoffen des Kolbenmaschinen- und Motorenbaus bestehen. Hierbei werden an die Oberflächengüte und Toleranzhäufigkeit der unausgekleideten Zylinderbohrung im Gegensatz zu konventionellen Kolbenmaschinengehäusen mit nassen oder trockenen Laufbuchsen keine besonderen Anforderungen gestellt, da der Auskleidungswerkstoff während der spaltfreien Kalteinformung Massdifferenzen ausgleicht und somit stets toleranzhaltige Bohrungsmasse mit glatter verdichteter Laufoberfläche garantiert.

Als Auskleidungsmaterial von Bimetallzylindern eignen sich alle duktilen Werkstoffe, deren Eigenschaften den gestellten Funktionsanforderungen der Kolbenmaschine genügen. Den Forderungen des Verbrennungsmotorenbaus nach sehr hoher Verschleissfestigkeit, hoher thermischer Stabilität, Elastizität und Korrosionsbeständigkeit sowie gutes Gleit- und Notlaufverhalten bei mangelndem Schmierölangebot entsprechen z.B. die vortrefflichen tribologischen Eigenschaften ausgehärteter Nickelbasislegierungen (z.B. NiCr19NbMo) in hervorragender Weise, wobei die tangentiale Druckspannung der kalteingeformten Auskleidung des Bimetallzylinders die sehr gute Verschleiss- und Korrosionsbeständigkeit des zähharten Hochtemperaturwerkstoffes noch zusätzlich günstig beeinflusst. Eine besondere Gleitpaarungsbeschichtung des Kolbens ist bei diesem Auskleidungswerkstoff nicht erforderlich. In der praktischen Anwendung wird die aus längsnahtgeschweissten, gebogenen Blechen zu einem dünnwandigen Rohr grober Toleranz verarbeitete Auskleidung aus geeigneten Werkstoffen in die Bohrung des Kolbenmaschinengehäuses mit grossem Passungspiel von Hand eingebracht und mittels mechanischer Kaltumformung unter Abstreckung der Wandstärke durch hohe spezifische radiale Druckbelastung spaltfrei mit direktem metallischem Kontakt in den Zylinder eingeformt. In Anwendung der zuvor genannten Einformungsverfahren oder einer Kombination dieser bekannten Verfahren ist eine zusätzliche oberflächenglättende Nachbearbeitung der Zylinderwand nicht erforderlich; allenfalls müssen die Enden des Zylindersrohres sorgfältig abgetrennt werden. Da die Wandstärke der Auskleidung eines Bimetallzylinders 0,2 bis 2 mm und darüber betragen kann, ist ein mehrfaches Ausschleifen der Zylinderbohrung nach einem Langzeitverschleiss bei der Überholung des Motors oder der Kolbenmaschine möglich. Ferner ist es ein bedeutender Vorteil der vorliegenden Erfindung, dass die verschlissene Auskleidung trotz ihrer bereits beschriebenen guten Haftung in dem Zylinder sich sehr einfach aus diesem entfernen lässt. Aufgrund ihrer tangentialen Druckspannung und fehlenden radialen Bindung löst sich die Auskleidung durch gewaltsame Zerstörung ihrer radialen Stabilität durch Längstrennung selbständig von der Zylinderwand, so dass diese ohne irgendwie zusätzliche Arbeitsvorgänge mehrfach wirtschaftlich neu ausgekleidet werden kann. Für Kolbenmaschinen, bei denen die zylindrische Kolbenlauffläche nicht unterbrochen ist, wie z.B. bei Viertaktmotoren, sind die rotierenden Aufbringungsverfahren geeignet, also das Hämmern, Walzen oder Kaltfliessdrükken, während für unterbrochene zylindrische Laufflächen wie z.B. bei Zweitaktmotoren ein Hochgeschwindigkeitsumformen geeignet ist, bei dem die Auskleidung mit dem Zylinder verschweisst. In diesem Fall entfällt allerdings der oben beschriebene Vorteil, dass die Auskleidung mit geringem Aufwand zu entfernen ist. Für die in den Ansprüchen 2 - 5 genannten Materialien werden im folgenden Beispiele genannt. Als Nickelbasislegierung wird genannt NiCr19NbMo oder sogar NiBe, das allerdings sehr teuer ist. Als Kupferbasislegierung wird CuBe vorgeschlagen, das eine sehr gute Wärmeleitfähigkeit aufweist und daher für hohe Temperaturen geeignet erscheint, wie sie beispielsweise bei Rennmotoren zu erwarten sind. Die weiterhin vorgeschlagenen martensitausgehärteten Stähle erscheinen wegen ihrer hohen Verschleissfestigkeit besonders geeignet, wenn man einen hohen Staubanteil in der Verbrennungsluft erwarten muss. Die weiterhin vorgeschlagenen hartanodierten Leitmetallauskleidungen erscheinen besonders preiswert für Motoren von hoher Stückzahl und haben ausserdem den Vorteil, dass ihre Wärmeausdehnung der des Aluminiumzylinders entspricht.

Neben den bereits genannten Vorteilen ist der Arbeitsaufwand und Herstellungszeit für die erfindungsgemässen Bimetallzylinder eines Kolbenmaschinengehäuses im Vergleich zu bekannten Konstruktionen sehr gering, so dass Bimetallzylinder für Hochleistungskolbenmaschinen, insbesondere solche in Leichtbauweise aus metallurgischer und fertigungstechnischer Sicht eine äusserst wirtschaftliche Optimallösung darstellen.

**Patentansprüche**

1. Kolbenmaschinengehäuse mit mindestens einem Zylinder zur Aufnahme oder Führung eines beweglichen Kolbens; dieser Zylinder hat an seiner Innenseite eine rohrförmige, metallurgische in sich geschlossene Schutzschicht aus einem anderen Werkstoff, die unter tangentialer Druckspannung mit dem Zylinder in direktem Kontakt steht, und ist gekennzeichnet durch folgendes Merkmal:

a) Diese Schutzschicht ist plastisch kalt mit rotierenden Werkzeugen an die Zylinderwand angeformt.

2. Kolbenmaschinengehäuse nach Anspruch 1, insbesondere aus einer Leichtmetallegierung und für Verbrennungsmotoren mit Leichtmetallkolben, mit folgenden Merkmalen:

a) Das Rohr besteht aus einer gehärteten Nickelbasislegierung.

3. Kolbenmaschinengehäuse nach Anspruch 1, insbesondere aus einer Leichtmetallegierung für Verbrennungsmotoren mit Leichtmetallkolben, mit folgenden Merkmalen:

a) Das Rohr besteht aus einer ausgehärteten Kupferbasislegierung.

4. Kolbenmaschinengehäuse nach Anspruch 1, insbesondere aus einer Leichtmetallegierung und für Verbrennungsmotoren mit Leichtmetallkolben, mit folgenden Merkmalen:

a) Das Rohr besteht aus einem martensitausgehärteten Stahl.

5. Kolbenmaschinengehäuse nach Anspruch 1, insbesondere aus einer Leichtmetallegierung und für Verbrennungsmotoren mit Leichtmetallkolben, mit folgenden Merkmalen:

a) Das Rohr besteht aus einem innen hartanodierten Leichtmetall.

6. Kolbenmaschinengehäuse nach Anspruch 1, mit folgendem Merkmal:

a) Das Rohr ist aus einem gebogenen längsnahtgeschweissten Blech hergestellt.

**Claims**

1. A reciprocating engine housing having at least one cylinder for accomodating or guiding a moving piston; this cylinder having on its inner face a tubular protective layer which is metallurgically self-contained and is made of another material, and which is in direct contact with the cylinder under tangential compressive stress, and is characterised by the following feature:

a) the protective layer is cold plastically shaped to the cylinder wall by means of rotating tools.

2. A reciprocating engine housing according to claim 1, in particular one made of a light metal alloy and for internal combustion engines with light metal pistons, having the following feature:

a) the tube consists of a hardened nickel-base alloy.

3. A reciprocating engine housing according to claim 1, in particular one made of a light metal alloy for internal combustion engines with light metal pistons, having the following feature:

a) the tube consists of a hardened copper-base alloy.

4. A reciprocating engine housing according to claim 1, in particular one made of a light metal alloy and for internal combustion engines with light metal pistons, having the following feature:

a) the tube consists of a martensite hardened steel.

5. A reciprocating engine housing according to claim 1, in particular made of a light metal alloy and for internal combustion engines with light metal pistons, having the following feature:

a) the tube consists of an internally anodically-hardened light metal.

6. A reciprocating engine housing according to claim 1, having the following feature:

a) the tube is produced from a curved and longitudinally seam-welded metal sheet.

**Revendications**

1. Bloc d'une machine à piston ayant au moins un cylindre de réception ou de guidage d'un piston mobile; ce cylindre a sur sa face intérieure une couche de protection tubulaire, fermée sur soi-même du point de vue métallurgique, en un matériau différent, et qui est en contact direct avec le cylindre sous un effort de compression tangentiel et est remarquable par la caractéristique suivante:

a) cette couche de protection est formée sur la paroi du cylindre par déformation plastique à froid au moyen d'outils tournants.

2. Bloc d'une machine à piston suivant la revendication 1, notamment en un alliage en métal léger pour des moteurs à combustion interne à piston en métal léger ayant les caractéristiques suivantes:

a) le tube est en un alliage trempé à base de nickel.

3. Bloc d'une machine à piston suivant la revendication 1, notamment en un alliage en métal léger pour des moteurs à combustion interne à piston en métal léger ayant les caractéristiques suivantes:

a) le tube est en un alliage durci par précipitation à base de cuivre.

4. Bloc d'une machine à piston suivant la revendication 1, notamment en un alliage en métal léger et pour des moteurs à combustion interne à piston en métal léger ayant les caractéristiques suivantes:

a) le tube est en un acier martensitique durci par précipitation.

5. Bloc d'une machine à piston suivant la revendication 1, notamment en un alliage en métal léger et pour des moteurs à combustion interne à piston en métal léger ayant les caractéristiques suivantes:

a) le tube est en un métal léger durci intérieurement par anodisation.

6. Bloc d'une machine à piston suivant la revendication 1, ayant la caractéristique suivante:

a) le tube est fabriqué en une tôle recourbée et soudée par une soudure longitudinale.